# EUROPEAN PATENT APPLICATION

(11) **EP 4 806 720 A1**
(43) Date of publication of application: **16.09.2026**
(21) Application number: 24888456.1
(22) Date of filing: 10.10.2024
(51) Int. Cl.: B60M 3/06, B60L 7/22, B60L 9/18, B60L 50/53, B60L 13/00

(54) **ELECTRICALLY DRIVEN VEHICLE**

(30) Priority: 07.11.2023 JP 2023190301
(71) Applicant: Hitachi Industrial Products, Ltd., Tokyo 101-0021 (JP)
(72) Inventor: KIKUCHI, Akira, Tokyo 100-8280 (JP); FURUKAWA, Isao, Tokyo 101-0021 (JP); HIGASHIMATA, Itaru, Tokyo 101-0021 (JP); AMEMIYA, Yoshiki, Tokyo 101-0021 (JP)
(74) Representative: MERH-IP Matias Erny Reichl Hoffmann Patentanwälte PartG mbB
(86) International application number: PCT/JP2024/036270
(87) International publication number: WO 2025/100158

(57) **Abstract**

The purpose of the present invention is to make more effective use of regenerative electric power. This electrically driven vehicle comprises a battery, a DC/DC converter which accepts the output voltage of the battery as an input, an inverter which accepts the voltage output from the DC/DC converter or the voltage from overhead wires as an input to drive an electric motor, and a brake chopper device which is connected to the DC side of the inverter, and the electrically driven vehicle is provided with an overhead wire load determiner which determines whether there is a load consuming power on the overhead wires or not on the basis of a detected voltage value on the DC side of the inverter and a detected current value of a current flowing from the inverter to the overhead wires.

## Description

### [Technical Fields]

The present invention relates to an electrically driven vehicle that runs by being powered by power from a overhead wire.

### [Background Technology]

Electrically driven vehicle are known that runs on the power supplied through a current collector such as a pantograph in the section where the overhead wire is laid, and that runs on the power stored in the battery installed in the vehicle in the section where the overhead wire is not laid.

In such vehicles, the regenerative power generated when the brake operation is performed is stored in the battery installed in the vehicle, or stored in the energy storage facility on the ground through the overhead wire, or supplied to other vehicles in motion through the overhead wire.

Patent literature 1 discloses a technology to improve the regenerative efficiency by securing the destination of regenerative power when using electric brakes, controlling the load of the vehicle load device, and maintaining the overhead wire voltage at a value suitable for regenerative operation.

### [Prior Art Documents]

### [Patent Literature]

[Patent Literature 1]JP2013-70611A

### [Summary of the invention]

### [Problem to be solved by the invention]

When power is regenerated, if there is no energy storage facility on the ground or there are no other vehicles running with connected to the overhead wire, problems such as an increase in the overhead wire voltage will occur when regenerative power is supplied to the overhead wire. Patent literature 1 does not give sufficient consideration to such issues. It is good if the battery installed in the vehicle can absorb all the regenerative power, but this problem occurs when there is surplus power that cannot be absorbed by the battery.

When the overhead wire voltage rises, measures are known to suppress the regenerative power supplied to the overhead wire. This is because when there is no load that consumes power with the overhead wire, the overhead voltage generally rises when regenerative power is supplied to the overhead wire. However, this is not the only factor that causes the overhead voltage to rise, and as the size of the grid voltage supplied from the power system to the substation increases, the size of the overhead wire voltage supplied by the substation also increases. If the regenerative power supplied to the overhead wire is suppressed with the rise, even if there is a load that can consume power on the overhead wire, the regenerative power supplied to the overhead wire will be suppressed, and the problem of effective use of regenerative power will not be achieved.

The purpose of the present invention is to make more effective use of regenerative electricity.

### [Means to solve the problem]

In order to solve the above problems, in an electrically driven vehicle equipped with a battery and a DC/DC converter with the output voltage of the battery as input, an inverter driving the electric motor as input using the output voltage of the DC/DC converter or the voltage from the overhead wire as input, and a brake chopper device connected to the DC side of the inverter, and an overhead wire load determiner is provided in an electrically driven vehicle that determines whether there is a load that consumes power connected to the overhead wire based on the voltage detection value on the DC side of the inverter and the current detection value of the current flowing from the inverter to the overhead wire.

### [Effect of the invention]

According to the present invention, if there is a load with the overhead wire, power can be supplied to the overhead wire, and the effective use of regenerative power can be achieved. If there is no load, the power can be consumed by the brake chopper device to suppress the rise of the overhead wire voltage. This will stabilize the overhead wire voltage and make more effective use of regenerative power.

### [Brief description of the drawing]

[FIG. 1] It is a diagram showing the composition of an embodiment of the present invention.
[FIG. 2] This is a diagram showing the configuration of the brake chopper device in FIG. 1.
[FIG. 3] This is a diagram showing the configuration of the controller in FIG. 1.
[FIG. 4] This is a diagram showing the configuration of the catenary load judge in FIG. 3.
[FIG. 5] This is a diagram showing the configuration of the chopper controller in FIG. 3.
[FIG. 6] This is a diagram showing the configuration of the chopper operation judger in FIG. 5.
[FIG. 7] An example of a working waveform in an embodiment of the present invention.
[FIG. 8] A diagram showing an example of a working waveform in an embodiment of the present invention.
[FIG. 9] This diagram shows other configurations of electrically driven vehicle.
[FIG. 10] This diagram shows other configurations of electrically driven vehicle.

### [Description of Embodiments]

Below, examples of an electric drive vehicle relating to the present invention are explained with reference to the drawing.

### [Embodiment 1]

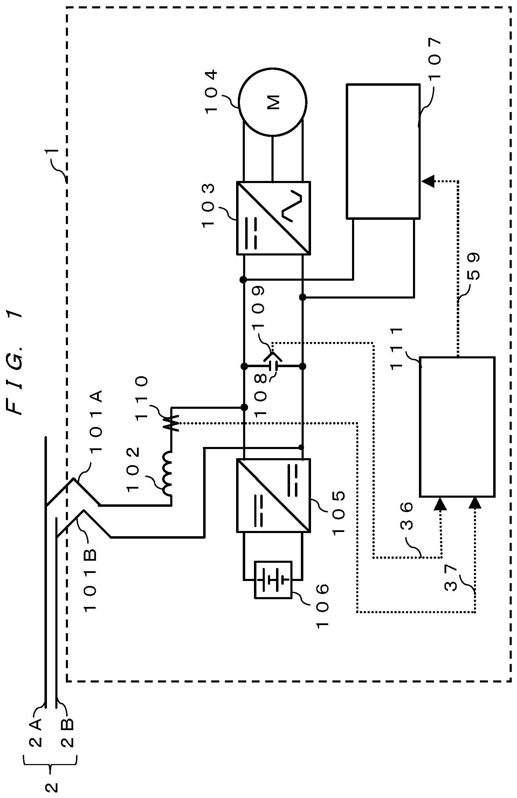

FIG. 1 shows the configuration of the first embodiment of an electrically driven vehicle. The electrically driven vehicle 1 of the present embodiment has a pantograph 101A, 101B, a reactor 102, an inverter 103, an electric motor 104, a DC/DC converter 105, a battery 106, a brake chopper device 107, a smoothing capacitor 108, a voltage sensor 109, a current sensor 110, and a controller 111.

When an electrically drive vehicle 1 runs on a section where overhead wires 2A and 2B are laid supplying DC voltage, pantograph 101 is connected to overhead wire 2. The DC power supplied to the electrically drivee vehicle 1 from the overhead wires 2A and 2B is supplied to the DC side of the inverter 103 through the pantograph 101 and reactor 102. The inverter 103 converts the DC power into three-phase alternating current power and supplies it to the electric motor 104 from the AC side of the inverter 103, and the electric motor 104 is driven by the three-phase alternating current power, so that the electrically driven vehicle 1 runs. The DC voltage of the inverter 103 is approximately equal to the DC voltage of the overhead wire 2, and the DC voltage of the inverter 103 is maintained by the overhead wire 2. The DC/DC converter 105 operates in a power control mode that controls the charging and discharging power of the battery 106, and in order to prepare for future driving in the section where overhead wires 2A and 2B are not laid, the battery 106 is usually charged at a constant current, and when the battery 106 is close to full charge, it is charged at a constant voltage.

On the other hand, when an electrically driven vehicle 1 runs in a section where overhead wires 2A and 2B are not laid, the DC/DC converter 105 supplies the electrical energy stored in the battery 106 as DC power to the DC side of the inverter 103, and the inverter 103 converts the DC power into three-phase AC power and supplies it to the electric motor 104 from the AC side of the inverter 103. The electric motor 104 is driven by its three-phase alternating current power, so that the electrically driven vehicle 1 runs. In order to maintain the DC voltage of the inverter 103 at a predetermined value, the DC/DC converter 105 operates in a voltage control mode that controls the DC voltage of the inverter 103. In other words, the DC/DC converter 105 charges and discharges the battery 106 so that the DC voltage of the inverter 103 is maintained.

The brake chopper device 107 is a device for connecting to the DC side of the inverter 103 and discharging the stored electrical energy on the DC side of the inverter 103. The brake chopper device 107 works by receiving a gate pulse signal from the controller 111, which is described below.

The smoothing capacitor 108 is connected to the DC side of the inverter 103, and the voltage sensor 109 detects the DC voltage of the inverter 103.

The current sensor 110 is connected in series with the reactor 102 and detects the current flowing through the reactor 102. In addition, the direction of the current flowing from reactor 102 in the direction of overhead line 2A is set as positive.

The controller 111 outputs a gate pulse signal 59 to the brake chopper device 107 using the voltage detection value 36 detected by the voltage sensor 109 and the current detection value 37 of the current sensor 110 as inputs. In addition, in this embodiment, only the controller 111 controlling the brake chopper device 107 is shown. In fact, a controller to control the inverter 103 and DC/DC converter 105 is also required, but the explanation is omitted in this embodiment.

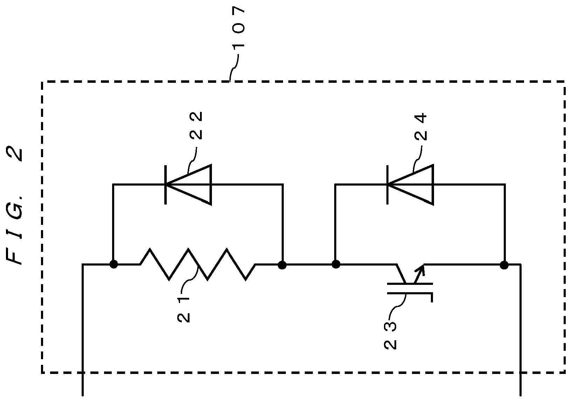

FIG. 2 is a diagram showing the configuration of the brake chopper device 107 in FIG. 1. The brake chopper device 107 has a resistor 21, a diode 22, a switching element 23 such as IGBT and SiC, and a diode 24. The resistor 21 and the switching element 23 are connected in series, while the diode 22 and diode 24 are connected to the resistor 21 and the switching element 23, respectively. By receiving a gate pulse signal from the controller 111, the switching element 23 conducts current to the resistor 21 and discharges the electrical energy stored on the DC side of the inverter 103.

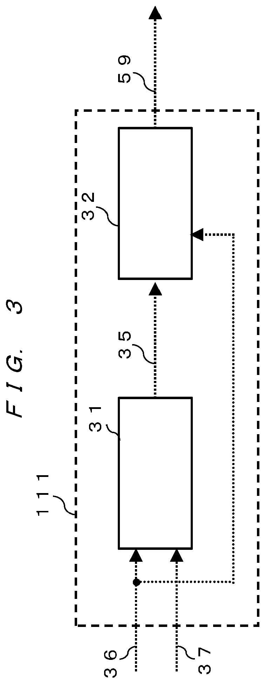

FIG. 3 is a diagram showing the configuration of controller 111 in FIG. 1. The controller 111 has a overhead wire load determiner 31 and a chopper controller 32. The overhead wire load determiner 31 determines whether or not there is a load on the overhead wire 2 that consumes the power that the electrically driven vehicle 1 regenerates to the overhead wire 2, and outputs it as a load judgement result. The chopper controller 32 outputs a gate pulse signal 59 to the brake chopper device 107 as input the load judgment result 35 output by the overhead wire load determiner 31 and the voltage detection value 36 detected by the voltage sensor 109.

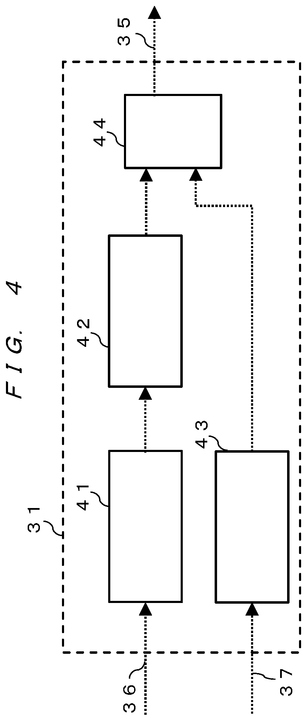

FIG. 4 is a diagram showing the configuration of the overhead wire load determiner 31 in FIG. 3. The overhead wire load determiner 31 has a voltage change rate calculator 41, a first code judge 42, a second code judge 43, and a multiplier 44.

The voltage change rate calculator 41 calculates the rate of change using the voltage detection value 36 detected by the voltage sensor 109 as the input.

The first code judge 42 uses the rate of change output by the voltage change rate calculator 41 as the input, and determines whether the voltage detection value detected by the voltage sensor 109 is rising or falling by determining the code of the rate of change as input. If the sign of the change rate is positive and the voltage detection value is rising, 1 is output as a judgment result. If the sign of the rate of change is zero or negative, and the voltage detection value is constant or declining, 0 is output as a judgment result.

In addition, if the sign of the rate of change is positive and exceeds a certain threshold set in advance, 1 may be output as a result of the judgment. In this case, it is possible to reduce the risk of false positives.

The second code judge 43 uses the current detection value 37 detected by the current sensor 110 as an input, and determines the direction of the current flowing to the reactor 102 by judging the code. If the sign is positive, that is, if the current flows from reactor 102 in the direction of overhead wire 2A, 1 is output as a judgment result. If the sign is zero or negative, that is, no current is flowing to the reactor 102, or if the current is flowing from the reactor 102 in the direction of the direct current side of the inverter 103, 0 is output as a judgment result.

The multiplier 44 takes the judgment result output by the first code judge 42 and the second code judge 43 as input, calculates the multiplication value, and outputs it as a load judgment result. The load judgment result is 1 when the judgment result output by the first code judge 42 and the second code judge 43 are both 1. Therefore, the load judgment result is 1 only when the voltage of the overhead wire 2 is rising and the power is regenerated to the overhead wire 2, and the load judgment result is 0 in other cases. In addition, if the load judgment result is 1, it means that there is no other load that consumes power during regeneration from the electrically driven vehicle 1 to the overhead wire 2, and if the load judgment result is 0, it means that the power is not regenerated to the overhead wire 2, or there is another load that consumes the power being regenerated on the overhead wire 2.

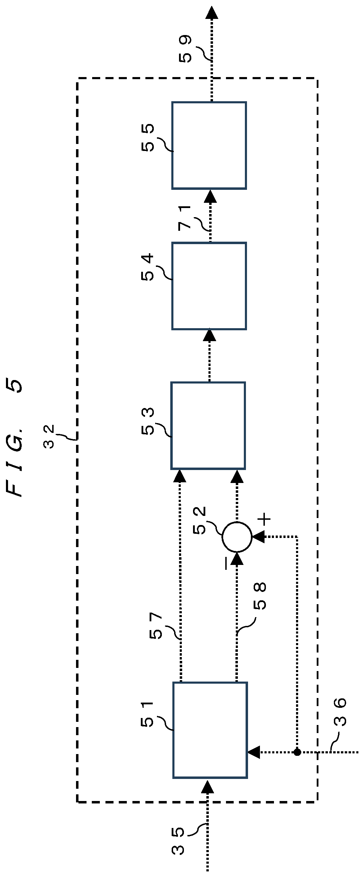

FIG. 5 is a diagram showing the configuration of the chopper controller 32 in FIG. 3. The chopper controller 32 has a chopper operation judge 51, a subtractor 52, a multiplier 53, a duty ratio operator 54, and a PWM operator 55.

The chopper operation judge 51 takes the load judgment result 35 output by the overhead wire load analyzer 31 and the voltage detection value 36 detected by the voltage sensor 109 as input. Then, the chopper operation judgment result 57 of whether or not the brake chopper device 107 is operated or not and the voltage command Vref 58 when the brake chopper device 107 is operated is output. The chopper operation judgment result 57 is 1 output when the brake chopper device 107 is operated, and 0 is output when it is not operated.

The subtractor 52 outputs the voltage detection value 36 detected by the voltage sensor 109 and the differential value of the voltage command Vref 58 output by the chopper operation judger 51.

The multiplier 53 outputs the chopper operation judgment result 57 output by the chopper operation judge 51 and the difference value output by the subtractor 52 as inputs, and outputs the multiplication value.

The duty ratio calculator 54 calculates the duty ratio 71, which is the instruction for turning the switching element 23 on/off, using the multiplication value output by the multiplier 53 as input. The duty ratio output of the duty ratio calculator 54 is limited in the range of 0 to 1. The duty ratio calculator 54 consists of proportional integral control for example.

The PWM operator 55 uses the duty ratio output of the duty ratio calculator 54 as an input to perform a comparison between the duty ratio and the carrier signal and outputs a gate pulse signal 59 to the switching element 23.

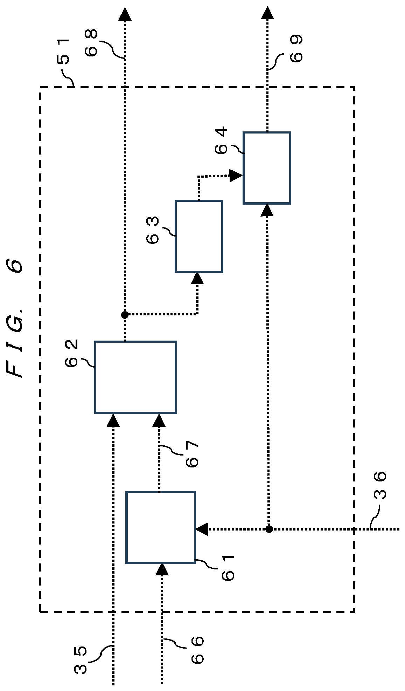

FIG. 6 is a diagram showing the configuration of the chopper operation judge 51 in FIG. 5. The chopper operation judge 51 has a comparator 61, a multiplier 62, a signal rising edge detector 63, and a sample hold operator 64.

The comparator 61 outputs the comparison result with a predetermined voltage threshold Vth 66 and a voltage detection value 36 detected by the voltage sensor 109 as input. If the voltage detection value is greater than the voltage threshold Vth, 1 is output as a comparison result, and if the voltage detection value is the same as or less than the voltage threshold Vth, 0 is output as a comparison result.

The multiplier 62 outputs the load judgment result 35 output by the overhead wire load determiner 31 and the comparison result output by the comparator 61 as input, and outputs the multiplication value as the chopper operation judgment result. If the load judgment result is 1 and the comparison result is 1, the chopper operation judgment result is 1. In other cases, the chopper operation judgment result will be 0. If the load judgment result is 1, it means that there is no other load that consumes power during the regeneration of electrically driven vehicle 1 to overhead wire 2. In that state, when the voltage detection value 36 detected by the voltage sensor 109 exceeds the predetermined voltage threshold Vth, the brake chopper device 107 must be operated to suppress the voltage rise of the overhead wire 2. Therefore, at this time, the chopper operation judgment result is set as 1.

The signal rising edge detector 63 detects the rising edge of the chopper operation judgment result output by the multiplier 62, and outputs a pulse signal at the timing when the rising edge is detected.

The sample hold operator 64 uses the pulse signal output by the signal rising edge detector 63 and the voltage detection value 36 of the voltage sensor 109 as input, and the voltage detection value detected by the voltage sensor 109 at the timing of the pulse signal input, and outputs it as a voltage command Vref 69. When the chopper operation judgment result changes from 0 to 1 when it is determined that the brake chopper device 107 needs to be operated, the signal rising edge detector 63 outputs a pulse signal, and the voltage detection value detected by the voltage sensor 109 is output as a voltage command Vref 69 at the timing when the pulse signal is output. In other words, since the voltage detection value when the brake chopper device 107 is started to operate is set as the voltage command Vref 69, the brake chopper device 107 discharges the electrical energy stored on the DC side of the inverter 103 so that the voltage detection value detected by the voltage sensor 109 does not rise further.

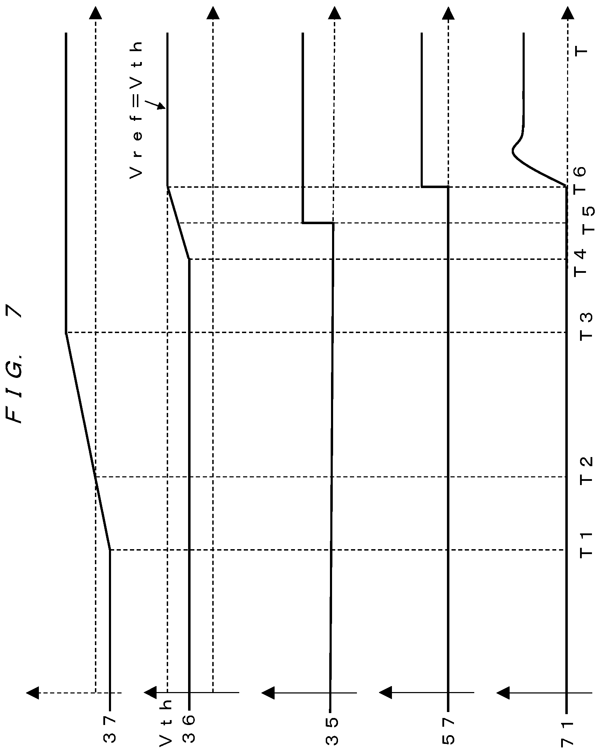

FIG. 7 is a diagram showing an example of a working waveform in one embodiment of the present invention. This case is an example of a case where the load existing on the overhead wire 2 is reduced when the power is being regenerated to the overhead wire 2.

Up to time T1, the current detection detection 37 detected by the current sensor 110 is negative, and since the current is flowing from the overhead wire 2 to the DC side of the inverter 103, the electrically driven vehicle 1 is running with the power supply from the overhead wire 2.

Next, the current detection value begins to change in a positive direction from time T1, and the current detection value is positive from time T2. From time T2, the power is regenerated from the DC side of inverter 103 to overhead wire 2, and the rise of the regenerative power stops at time T3 and becomes constant. However, since the voltage detection value 36 detected by the voltage sensor 109 has not changed even though the power is regenerated to the overhead wire 2 from time T2, the power regenerated to the overhead wire 2 is consumed by the load existing in the overhead wire 2.

Then, when the load on the overhead wire 2 decreases from time T4 and the power consumed by the overhead wire 2 decreases, the voltage detection value 36 detected by the voltage sensor 109 begins to rise. Since the voltage detection value rises while recovering power to the overhead wire 2, the overhead wire load determiner 31 outputs 1 as the load judgment result at time T5.

Next, at time T6, when the voltage detection value 36 reaches the voltage threshold Vth, the chopper operation judge 51 outputs 1 as the chopper operation judgment result, and sets the voltage detection value at that time as the voltage command Vref. For this reason, the chopper controller 32 adjusts the duty ratio so that the voltage detection value does not exceed the voltage command Vref, thereby suppressing the increase in the voltage detection value.

As mentioned above, when the load existing on the overhead wire 2 decreases during the regeneration of power to overhead wire 2, and the load cannot consume all the power regenerated to overhead wire 2, the brake chopper device 107 can suppress the voltage rise of overhead wire 2 by operating.

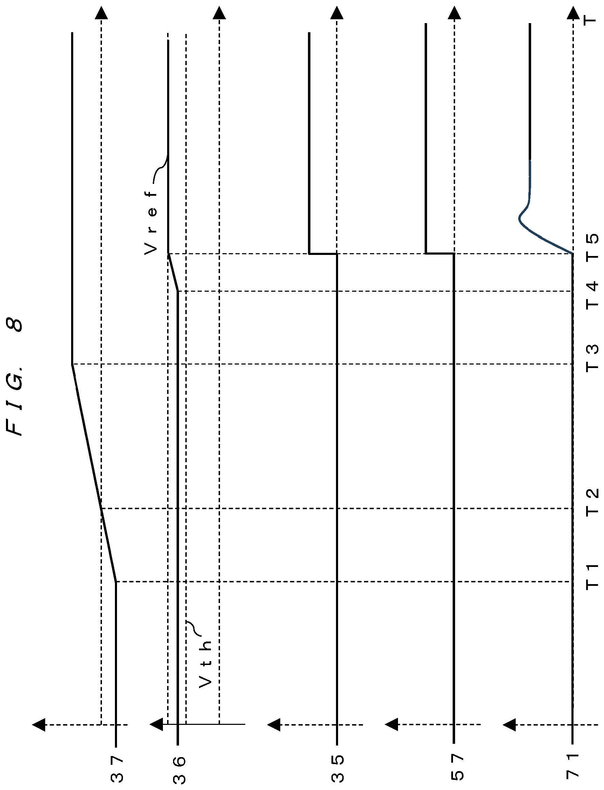

FIG. 8 is a diagram showing another operating waveform example in an embodiment of the present invention. This case is an example of a case where the voltage of overhead wire 2 has risen from the beginning, and the load existing on overhead wire 2 decreases when power is being regenerated to overhead wire 2.

Up to time T1, the current detection value 37 detected by the current sensor 110 is negative, and since the current is flowing from the overhead wire 2 to the DC side of the inverter 103, the electrically driven vehicle 1 is running with the power supply from the overhead wire 2.

Next, the current detection value begins to change in a positive direction from time T1, and the current detection value is positive from time T2. From time T2, the power is regenerated from the DC side of inverter 103 to overhead wire 2, and the rise of the regenerative power stops at time T3 and becomes constant. However, since the voltage detection value 36 detected by the voltage sensor 109 has not changed even though the power is regenerated to the overhead wire 2 from time T2, the power regenerated to the overhead wire 2 is consumed by the load existing in the overhead wire 2.

Then, when the load on the overhead wire 2 decreases from time T4 and the power consumed by the overhead wire 2 decreases, the voltage detection value 36 detected by the voltage sensor 109 begins to rise. Since the voltage detection value rises while recovering power to the overhead wire 2, the overhead wire load determiner 31 outputs 1 as the load judgment result at time T5. At this time, since the voltage detection value exceeds the voltage threshold Vth, the chopper operation judge 51 outputs 1 as the chopper operation judgment result, and sets the voltage detection value at that time as the voltage command Vref. The chopper controller 32 adjusts the duty ratio 71 so that the voltage detection value does not exceed the voltage command Vref, thereby suppressing the increase in the voltage detection value.

As described above, in a case where the voltage of the overhead wire 2 is rising from the beginning, when the other load connected to the overhead wire 2 decreases while the power is being regenerated to the overhead wire 2, and the other load cannot consume the power that the electrically driven vehicle 1 is regenerating to the overhead wire 2, the brake chopper device 107 can operate and suppress the voltage rise of the c overhead wire 2.

### [Embodiment 2]

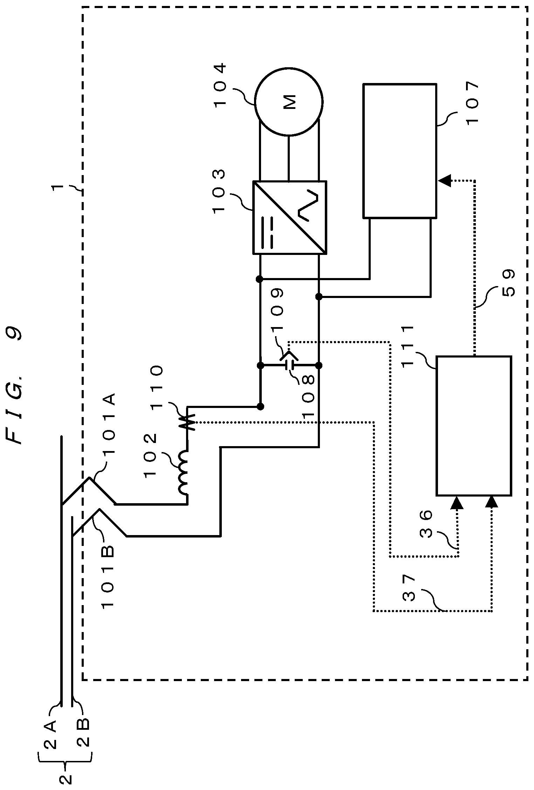

FIG. 9 is a variant example showing other configurations of an electrically driven vehicle. The electrically driven vehicle 1 of the present embodiment basically has a pantograph 101A, 101B, a reactor 102, an inverter 103, an electric motor 104, a brake chopper device 107, a smoothing capacitor 108, a voltage sensor 109, a current sensor 110, and a controller 111, as in embodiment 1 and FIG. 1. The difference from the electrically driven vehicle 1 in FIG. 1 is that it does not have a DC/DC converter 105 and a battery 106. Therefore, the electrically driven vehicle 1 in the present embodiment is always operated in a state connected to the overhead wire. Other than that, as in the embodiment 1, the electrically driven vehicle 1 shown in the embodiment 1 determines whether there is a load that can consume power on the overhead wire 2, and if there is a load, power can be supplied to the overhead wire, and if there is no load, the power can be consumed by the brake chopper device 107. By this way, even an electrically driven vehicle without a DC/DC converter 105 and a battery 106 can have the same effect as the configuration of embodiment 1.

### [Embodiment 3]

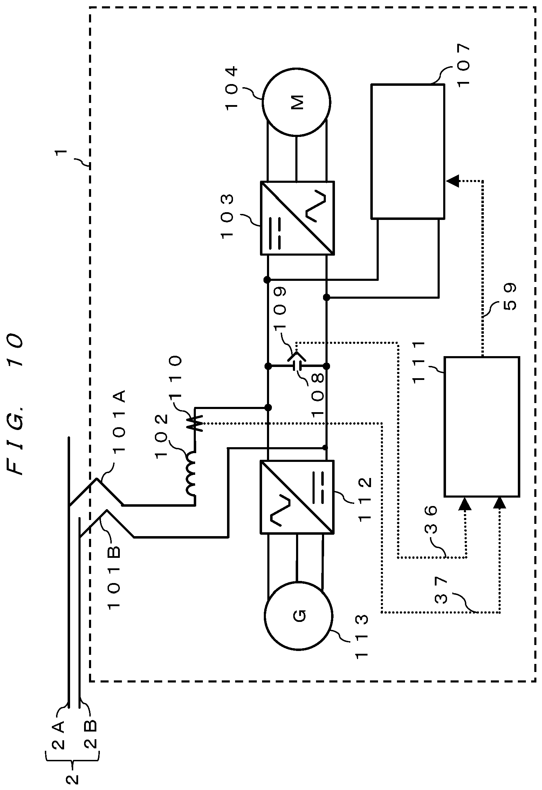

FIG. 10 is a variant example showing other configurations of an electrically driven vehicle. The electrically driven vehicle 1 of the present embodiment basically has a pantograph 101A, 101B, a reactor 102, an inverter 103, an electric motor 104, a brake chopper device 107, a smooth capacitor 108, a voltage sensor 109, a current sensor 110, and a controller 111, as in embodiment 1 and FIG. 1. The difference from the electrically driven vehicle 1 in FIG. 1 is that instead of the DC/DC converter 105 and the battery 106, it is equipped with an AC/DC converter 112 and a generator 113. Although not detailed in this embodiment, the generator 113 generates electricity by being driven by an engine, etc. Even in such a configuration, as in the electrically driven vehicle 1 in FIG. 1, it is possible to determine whether there is a load that can consume power on the overhead wire 2, and if there is a load, power can be supplied to the overhead wire, and if there is no load, the power can be consumed by the brake chopper device 107. This allows an electrically driven vehicle with an AC/DC converter 112 and a generator 113 to have the same effect as the configuration of embodiment 1 instead of the DC/DC converter 105 and the battery 106.

As mentioned above, the present invention described using embodiment 1 to 3 is widely applicable to electrically driven vehicles. Among them, one of the most suitable applications is dump trucks, which can contribute to environmental response by efficiently utilizing regenerative electricity because they are concentrated in a limited area such as a mine. In addition, trolleybus is also a suitable example in the application area, and a form in which a large number of electrically driven vehicles are operated in a narrow operating route is also suitable.

In addition, the various inventions disclosed in the specification of the present application described above can also be expressed as follows as an example.

### <Example 1>

An electrically driven vehicle with a battery, a DC/DC converter which accepts the output voltage of the battery as an input, an inverter driving an electric motor with the output voltage of the DC/DC converter or a voltage from the overhead wire as input, and a brake chopper device connected to the DC side of the inverter, and being equipped with a overhead wire load determiner that determines whether there is a load that consumes power connected to the overhead wire based on the voltage detection value of the DC side of the inverter and the current detection value of the current flowing from the inverter to the overhead wire.

### <Example 2>

The electrically driven vehicle according to example 1, overhead wire load determiner determines that there is a load that consumes power connected to the overhead wire when the rate of change of the voltage detection value is positive, and the current detection value is positive.

### <Example 3>

The electrically driven vehicle according to example 2, the brake chopper device based on the judgment results of the overhead wire load determiner and the voltage detection value.

### <Example 4>

The electrically driven vehicle according to example 1, the overhead wire load determiner determine that there is a load that consumes electricity connected to the overhead wire when the percentage change of the voltage detection value is positive, and the value exceeds a predetermined threshold, and the current detection value is positive.

### <Example 5>

The electrically driven vehicle according to example 4, based on the judgment results of the overhead wire load determiner and the voltage detection value, the brake chopper device is operated.

### <Example 6>

An electrically driven vehicle with an inverter that drives the electric motor using the voltage from the overhead wire as input, and a brake chopper device that connects to the DC side of said inverter, and an overhead wire load determiner is provided to determine whether there is a load that consumes power connected to the overhead wire based on the voltage detection value of the DC side of the inverter and the current detection value of the current flowing from the inverter to the overhead wire.

### <Example 7>

The electrically driven vehicle according to example 6, the overhead wire load determiner determines that there is a load that consumes power connected to the overhead wire when the rate of change of the voltage detection value is positive and the current detection value is positive.

### <Example 8>

The electrically driven vehicle according to example 7, the brake chopper device is operated based on the judgment results of the overhead wire load determiner and the voltage detection value.

### <Example 9>

The electrically driven vehicle according to example 6, the overhead wire load determiner determines that there is a load that consumes power connected to the overhead wire when the rate of change of the voltage detection value is positive, and the value exceeds a predetermined threshold, and the current detection value is positive

### <Example 10>

The electrically driven vehicle according to example 9, the brake chopper device is operated based on the judgment results of the overhead wire load determiner and the voltage detection value.

### <Example 11>

An electrically driven vehicle with a generator and an AC/DC converter with the output voltage of the generator as input, an inverter driving the electric motor with the output voltage of the AC/DC converter or the voltage from the overhead wire as input, and a brake chopper device connected to the DC side of the inverter, an inverter that drives the electric motor using the voltage from the overhead wire as input, and a brake chopper device that connects to the DC side of said inverter; and an overhead wire load determiner is provided to determine whether there is a load that consumes power connected to the overhead wire based on the voltage detection value of the DC side of the inverter and the current detection value of the current flowing from the inverter to the overhead wire.

### <Example 12>

The electrically driven vehicle according to example 11, the overhead wire load determiner determines that there is a load that consumes power connected to the overhead wire when the rate of change of the voltage detection value is positive and the current detection value is positive.

### <Example 13>

The electrically driven vehicle according to example 12, the brake chopper device is operated based on the judgment results of the overhead wire load determiner and the voltage detection value.

### <Example 14>

The electrically driven vehicle according to example 11, the overhead wire load determiner determines that there is a load that consumes power connected to the overhead wire when the rate of change of the voltage detection value is positive and the value exceeds a predetermined threshold, and the current detection value is positive.

### <Example 15>

The electrically driven vehicle according to example 14, the brake chopper device is operated based on the judgment results of the overhead wire load determiner and the voltage detection value.

### [Explanation of the sign]

- 1:: Electrically Driven Vehicle
- 2:: Overhead wire
- 21:: Resistaor
- 22:: Diode
- 23:: Switching Element
- 24:: Diode
- 31:: overhead wire load determiner
- 32:: Chopper Controller
- 35:: Load Judgment Result
- 36:: Voltage Detection Value
- 37:: Current Sensing Value
- 41:: Voltage Change Rate Calculator
- 42:: The first code judge
- 43:: The second code judge
- 44:: Multiplier
- 51:: Chopper Operation judge
- 52:: Subtractor
- 53:: Multiplier
- 54:: Duty Ratio calculator
- 55:: PWM Operator
- 61:: Comparator
- 62:: Multiplier
- 63:: Signal Rising Edge Detector
- 64:: Sample Hold Operator
- 101:: Pantograph
- 102:: Reactor
- 103:: Inverter
- 104:: Electric motor
- 105:: DC/DC Converter
- 106:: Battery
- 107:: Brake Chopper Device
- 108:: Smoothing Capacitors
- 109:: Voltage Sensor
- 110:: Current Sensor
- 111:: Controller
- 112:: AC/DC Converter
- 113:: Generator

## Claims

1. An electrically driven vehicle comprising:
a battery,
a DC/DC converter which accepts the output voltage of the battery as an input,
an inverter driving an electric motor with the output voltage of the DC/DC converter or a voltage from the overhead wire as input,
and a brake chopper device connected to the DC side of the inverter,
wherein being equipped with a overhead wire load determiner that determines whether there is a load that consumes power connected to the overhead wire based on the voltage detection value of the DC side of the inverter and the current detection value of the current flowing from the inverter to the overhead wire.

2. The electrically driven vehicle according to claim 1, wherein overhead wire load determiner determines that there is a load that consumes power connected to the overhead wire when the rate of change of the voltage detection value is positive, and the current detection value is positive.

3. The electrically driven vehicle according to claim 2, wherein the brake chopper device based on the judgment results of the overhead wire load determiner and the voltage detection value.

4. The electrically driven vehicle according to claim 1, wherein the overhead wire load determiner determine that there is a load that consumes electricity connected to the overhead wire when the percentage change of the voltage detection value is positive, and the value exceeds a predetermined threshold, and the current detection value is positive.

5. The electrically driven vehicle according to claim 4, wherein based on the judgment results of the overhead wire load determiner and the voltage detection value, the brake chopper device is operated.

6. An electrically driven vehicle comprising:
an inverter that drives the electric motor using the voltage from the overhead wire as input, and a brake chopper device that connects to the DC side of said inverter
wherein an overhead wire load determiner is provided to determine whether there is a load that consumes power connected to the overhead wire based on the voltage detection value of the DC side of the inverter and the current detection value of the current flowing from the inverter to the overhead wire.

7. The electrically driven vehicle according to claim 6, wherein the overhead wire load determiner determines that there is a load that consumes power connected to the overhead wire when the rate of change of the voltage detection value is positive and the current detection value is positive.

8. The electrically driven vehicle according to claim 7, wherein the brake chopper device is operated based on the judgment results of the overhead wire load determiner and the voltage detection value.

9. The electrically driven vehicle according to claim 6, wherein the overhead wire load determiner determines that there is a load that consumes power connected to the overhead wire when the rate of change of the voltage detection value is positive, and the value exceeds a predetermined threshold, and the current detection value is positive

10. The electrically driven vehicle according to claim 9, wherein the brake chopper device is operated based on the judgment results of the overhead wire load determiner and the voltage detection value.

11. An electrically driven vehicle comprising:
a generator and an AC/DC converter with the output voltage of the generator as input,
an inverter driving the electric motor with the output voltage of the AC/DC converter or the voltage from the overhead wire as input,
and a brake chopper device connected to the DC side of the inverter,
an inverter that drives the electric motor using the voltage from the overhead wire as input, and a brake chopper device that connects to the DC side of said inverter;
wherein an overhead wire load determiner is provided to determine whether there is a load that consumes power connected to the overhead wire based on the voltage detection value of the DC side of the inverter and the current detection value of the current flowing from the inverter to the overhead wire.

12. The electrically driven vehicle according to claim 11, wherein the overhead wire load determiner determines that there is a load that consumes power connected to the overhead wire when the rate of change of the voltage detection value is positive and the current detection value is positive.

13. The electrically driven vehicle according to claim 12, wherein the brake chopper device is operated based on the judgment results of the the overhead wire load determiner and the voltage detection value.

14. The electrically driven vehicle according to claim 11, wherein the overhead wire load determiner determines that there is a load that consumes power connected to the overhead wire when the rate of change of the voltage detection value is positive and the value exceeds a predetermined threshold, and the current detection value is positive.

15. The electrically driven vehicle according to claim 14, wherein the brake chopper device is operated based on the judgment results of the overhead wire load determiner and the voltage detection value.
